# EUROPÄISCHE PATENTSCHRIFT

(11) **EP 3 967 538 B1**
(45) Veröffentlichungstag und Bekanntmachung des Hinweises auf die Patenterteilung: **29.01.2025**
(21) Anmeldenummer: 21194094.5
(22) Anmeldetag: 31.08.2021
(51) Int. Cl.: B60K 35/233, B60K 35/28, B60K 35/81, G01C 21/36, G02B 27/01, G06T 11/60

(54) **VERFAHREN ZUR DARSTELLUNG EINES VIRTUELLEN ELEMENTS**
METHOD FOR DEPICTING A VIRTUAL ELEMENT
PROCÉDÉ DE REPRÉSENTATION D'UN ÉLÉMENT VIRTUEL

(30) Priorität: 09.09.2020 DE 102020211301
(43) Veröffentlichungstag der Anmeldung: 16.03.2022
(73) Patentinhaber: VOLKSWAGEN AG, 38440 Wolfsburg (DE)
(72) Erfinder: Kunze, Alexander, 13585 Berlin (DE); Tebaibi, Yannis, 38106 Braunschweig (DE); Sandbrink, Johanna, 38102 Braunschweig (DE); Sadovitch, Vitalij, 38102 Braunschweig (DE)

(56) Entgegenhaltungen:
- WO-A1-2017/134865
- WO-A1-2020/021842
- WO-A1-2020/162109
- JP-A- 2020 097 399

## Beschreibung

Die Erfindung betrifft ein Verfahren zur Darstellung eines virtuellen Elements in einem Anzeigebereich mindestens einer Anzeigeeinrichtung eines Fahrzeugs, wobei im Anzeigebereich der Anzeigeeinrichtung ein dreidimensionaler Raum dargestellt wird, wobei auf Basis mindestens einer Datenquelle dreidimensionale Koordinaten für die Verortung mindestens eines virtuellen Elements bestimmt werden, wobei das mindestens eine virtuelle Element als zweidimensionale Abbildung in den dreidimensionalen Raum, der im Anzeigebereich der Anzeigeeinrichtung dargestellt wird, transformiert wird, wenn die dreidimensionalen Koordinaten des virtuellen Elements im dargestellten dreidimensionalen Raum innerhalb des Anzeigebereichs der Anzeigeeinrichtung liegen und wobei das mindestens eine virtuelle Element im Anzeigebereich der Anzeigeeinrichtung in Bezug auf den dreidimensionalen Raum perspektivisch korrekt im Blickfeld des Fahrers dargestellt wird.

Mit der stetigen Weiterentwicklung von Virtual- und Augmented-Reality-Technologien und -Anwendungen finden diese auch Einzug in das Automobil. Bei Augmented-Reality (AR) handelt es sich um die Anreicherung der realen Welt durch virtuelle Elemente, die im dreidimensionalen Raum ortskorrekt registriert beziehungsweise verortet sind und eine Echtzeitinteraktion erlauben. Eine mögliche technische Realisierung um den Fahrerarbeitsplatz entsprechend mit perspektivisch korrekten virtuellen Augmentierungen anzureichern, bietet das Head-Up-Display (HUD).

Gerade bei Head-Up-Displays entsteht die virtuelle Anzeige durch eine im Armaturenbrett integrierte bildgebende Einheit, wie beispielsweise ein TFT-Display. Dieses Bild wird über mehrere Spiegel in Richtung der Windschutzscheibe gelenkt, wo das Licht in das Auge des Fahrers reflektiert wird. Der Fahrer nimmt dieses Bild als eine virtuelle Anzeige im Sichtfeld wahr. Bei der Auslegung solcher Systeme wird der Bereich, in den das Licht reflektiert wird, räumlich begrenzt, um eine höhere Helligkeit durch geringere Lichtstreuung zu erzielen. Dieser Bereich wird als "EyeBox" bezeichnet, da sich das Blickfeld des Fahrers in diesem Bereich befinden muss, um eine Wahrnehmung des virtuellen Bildes zu ermöglichen.

Aufgrund des relativ schmalen Blickfelds kann es sein, dass eine perspektivisch korrekte Darstellung eines virtuellen Elements nicht möglich ist, da die Verortung des virtuellen Objekts außerhalb der "EyeBox" erfolgen müsste. Für die Anzeige von Objekten, die nicht im Blickfeld des Fahrers liegen gibt es unterschiedliche Bemühungen.

Die DE 10 2017 211 244 B3 offenbart beispielsweise ein Verfahren zum Anreichern des Sichtfeldes eines Fahrers eines Fahrzeugs mit Zusatzinformationen. Dazu ist vorgesehen, dass für den Fall, dass ein Fahrzeug, das mit einer aktiven Blinkleuchte ankündigt, dass die Absicht besteht, die Fahrbahn zu wechseln, das Fahrzeug ebenfalls blinkend im Blickfeld des Fahrers angezeigt wird.

Die Druckschrift WO 2020/021842 A1 offenbart ein Verfahren zur Darstellung von virtuellen Elementen in einem dreidimensionalen Raum, wobei der dreidimensionale Raum eine Darstellung der Perspektive des Fahrers durch die Windschutzscheibe ist. Wenn, beispielhaft aufgrund von Steigungen, Objekte im dreidimensionalen Raum nur teilweise sichtbar sind (zum Beispiel Fahrbahnmarkierungen), können virtuelle Elemente genutzt werden, um perspektivisch über dem Objekt auf dieses Objekt hinzuweisen.

Die JP 2020-97399 A zeigt ein Verfahren zur Darstellung von virtuellen Elementen in einem dreidimensionalen Raum, wobei der dreidimensionale Raum eine Darstellung der Perspektive des Fahrers durch die Windschutzscheibe ist.

Die Druckschrift WO 2020/162109 A1 zeigt, dass virtuelle Elemente genutzt werden können, um auf Gegebenheiten hinzuweisen, die im dreidimensionalen Raum nicht sichtbar sind.

Die WO 2017/134865 A1 offenbart, dass virtuelle Elemente genutzt werden können, um auf Gegebenheiten hinzuweisen, die im dreidimensionalen Raum nicht sichtbar sind.

Ein Nachteil des vorgenannten Standes der Technik besteht darin, dass dem Fahrer kein Gefühl der tatsächlichen Entfernung von relevanten Objekten außerhalb des Blickfeldes vermittelt wird.

Der Erfindung liegt daher die Aufgabe zugrunde, ein Verfahren anzugeben, bei dem virtuelle Elemente, die außerhalb des Anzeigebereichs einer Anzeigeeinrichtung liegen, mit einer gewissen Entfernungs- beziehungsweise Richtungseinschätzung für den Fahrer wahrnehmbar sind.

Diese Aufgabe ist bei der vorliegenden Erfindung durch die Merkmale des Kennzeichnungsteils des Patentanspruchs 1 dadurch gelöst, dass einem Fahrer des Fahrzeugs signalisiert wird, wenn die bestimmten dreidimensionalen Koordinaten des mindestens einen virtuellen Elements außerhalb des Anzeigebereichs der Anzeigeeinrichtung liegen. Auf diese Weise wird dem Fahrer des Fahrzeugs mitgeteilt, dass für ihn relevante Objekte außerhalb seines Blickfeldes liegen. Die Signalisierung kann dabei visuell, aber beispielsweise auch akustisch erfolgen.

Beim Anzeigebereich der Anzeigeeinrichtung kann es sich um ein Display im Mittelbereich oder im Cockpitbereich, beispielsweise im Kombiinstrument des Fahrzeugs, handeln. Alternativ oder zusätzlich kann der Anzeigebereich der Anzeigeeinrichtung als Head-Up-Display ausgestaltet sein. Unter Head-Up-Display ist ein Anzeigebereich zu verstehen, bei dem der Fahrer seine Kopfhaltung beziehungsweise Blickrichtung beibehalten kann, weil die Informationen in sein Sichtfeld, beispielsweise auf die Windschutzscheibe des Fahrzeugs, projiziert werden.

Der dargestellte dreidimensionale Raum kann vorzugsweise einen Bereich außerhalb des Fahrzeugs in Fahrtrichtung beschreiben. Bei einem Head-Up-Display ist der Anzeigebereich der Anzeigeeinrichtung beziehungsweise der dreidimensionale Raum gleichzusetzen mit dem Blick durch die Windschutzscheibe. Der dreidimensionale Raum ist dann folglich der Raum vor dem Fahrzeug im Blickfeld des Fahrers beziehungsweise des Beifahrers. Bei den entsprechend zum virtuellen Element berechneten dreidimensionalen Koordinaten kann es sich beispielsweise um kartesische Koordinaten handeln.

Die zur Berechnung der Koordinaten benötigten Datenquellen können unterschiedlicher Art sein. Bevorzugt handelt es sich bei diesen Datenquellen um Fahrzeugdaten beziehungsweise Navigationsdaten, die durch die Positionierungssensorik des Fahrzeugs, wie zum Beispiel GPS, Drehratensensoren oder Kameras aufgenommen werden.

Bei der Berechnung der dreidimensionalen Koordinaten des virtuellen Elements wird festgestellt, ob das Element perspektivisch korrekt im Blickfeld des Fahrers dargestellt werden kann. Ist dies nicht der Fall, weil die dreidimensionalen Koordinaten außerhalb des Blickfeldes liegen, wird stattdessen dem Fahrer angezeigt, dass ein solches virtuelles Element nicht im Anzeigebereich der Anzeigeeinrichtung beziehungsweise nicht in seinem Blickfeld liegt.

Bei dem virtuellen Element kann es sich um verschiedene Bildelemente und/oder Schaltflächen handeln, die im Anzeigebereich der Anzeigeeinrichtung dargestellt werden. Die virtuellen Elemente können eine Verbindung zu Fahrzeugdaten aufweisen und/oder abhängig von den Fahreigenschaften des Fahrzeugs sein. Die Daten können zum Beispiel aus vorhandenen Fahrassistenzsystemen stammen. Es ist aber auch denkbar, dass die dargestellten virtuellen Elemente irrelevant für die Fahreigenschaften des Fahrzeugs sind.

Weitere bevorzugte Ausgestaltungen der Erfindung ergeben sich aus den übrigen, in den Unteransprüchen genannten Merkmalen.

Erfindungsgemäß ist vorgesehen, dass die dreidimensionalen Koordinaten des virtuellen Elements auf der Grundlage einer Abstandsmessung zum vorausfahrenden Fahrzeug bestimmt werden. Auf diese Weise können Daten der sogenannten "Adaptive Cruise Control (ACC)" genutzt werden. Bei dieser Funktion können Nutzer zwischen beispielsweise fünf Stufen wählen, die jeweils in einem unterschiedlichen Abstand zum Vorderfahrzeug resultieren.

Denkbar wäre dabei, dass Markierungen als kontaktanaloge virtuelle Elemente in das Blickfeld des Fahrers projiziert werden, die die Einschätzung des räumlichen Abstands vereinfachen. Wenn solche Markierungen sich nicht mehr im Blickfeld des Fahrers befinden, weil der Abstand beispielsweise zu groß ist, um eine solche Markierung perspektivisch korrekt im Anzeigebereich der Anzeigeeinrichtung darzustellen, wird der Fahrer entsprechend des erfindungsgemäßen Verfahrens darauf hingewiesen.

Alternativ oder zusätzlich kann bei einer weiteren Ausgestaltung des erfindungsgemäßen Verfahrens vorgesehen sein, dass die dreidimensionalen Koordinaten des virtuellen Elements auf Grundlage des zeitlichen Abstands zum vorausfahrenden Fahrzeug bestimmt werden. Durch die Zeitlückenverstellung kann der Fahrer des Fahrzeugs zwischen beispielsweise fünf Stufen wählen, die jeweils in einem unterschiedlichen Abstand zum Vorderfahrzeug resultieren. Entsprechend der Bezeichnung Zeitlücke ist jede Stufe durch einen spezifischen zeitlichen Abstand zum Vorderfahrzeug definiert, wie beispielsweise 1 s. Aus der Ist-Geschwindigkeit sowie der Zeitlücke errechnet sich der zu haltende Abstand, welcher im Anzeigebereich der Anzeigeeinrichtung als kontaktanaloge Linie dargestellt werden kann. Denkbar sind dabei auch andere Darstellungen.

Entsprechend der Definition verschiebt sich die Linie perspektivisch nach hinten beziehungsweise vorn (im 2D Blickfeld nach oben bzw. unten), sodass diese aus dem Blickfeld hinauswandern kann. Im Idealfall sind alle wählbaren Stufen im Blickfeld sichtbar. Abhängig von der Geschwindigkeit können einzelne Linien jedoch aus dem Blickfeld herauswandern, wodurch eine Darstellung der derzeit aktiven Zeitlücke nicht mehr gegeben ist. Daher wird dem Fahrer gemäß dem erfindungsgemäßen Verfahren mitgeteilt, dass sich eine dieser Linien beziehungsweise Markierungen außerhalb des Anzeigebereichs liegt.

Bei einer vorteilhaften Ausgestaltung des erfindungsgemäßen Verfahrens ist vorgesehen, dass in einem Randbereich des Anzeigebereichs der Anzeigeeinrichtung dargestellt wird, dass die dreidimensionalen Koordinaten des mindestens einen virtuellen Elements außerhalb des Anzeigebereichs der Anzeigeeinrichtung liegen. Auf diese Weise wird dem Fahrer zwar signalisiert, dass ein virtuelles Element nicht im Anzeigebereich dargestellt werden kann, da es sich perspektivisch außerhalb dieses Bereiches befindet. Der Fahrer wird aber nicht unnötigerweise abgelenkt, wenn eine Signalisierung lediglich im Randbereich erfolgt. Somit werden auch weitere dargestellte virtuelle Elemente nicht überlagert und der Anzeigebereich der Anzeigeeinrichtung wird insgesamt nicht unübersichtlich für den Fahrer.

Um das erfindungsgemäße Verfahren intuitiver zu gestalten, ist bei einer weiteren Ausgestaltung vorgesehen, dass im oberen Randbereich des Anzeigebereichs der Anzeigeeinrichtung dargestellt wird, dass die dreidimensionalen Koordinaten des mindestens einen virtuellen Elements außerhalb des Anzeigebereichs der Anzeigeeinrichtung liegen, wenn die dreidimensionalen Koordinaten des mindestens einen virtuellen Elements perspektivisch so weit im Hintergrund liegen, dass die zweidimensionale Abbildung des virtuellen Elements oberhalb des Anzeigebereichs der Anzeigeeinrichtung liegt.

Elemente die im Anzeigebereich der Anzeigeeinrichtung perspektivisch hinten in einem größeren Abstand liegen, wandern im 2D Blickfeld nach oben. Dem Fahrer wird also durch die Signalisierung im oberen Randbereich suggeriert, dass ein Element so weit in den Hintergrund beziehungsweise nach hinten gewandert ist, dass es im Anzeigebereich der Anzeigeeinrichtung nicht mehr dargestellt werden kann.

Entsprechend ist bei einer weiteren Ausgestaltung des erfindungsgemäßen Verfahrens vorgesehen, dass im unteren Randbereich des Anzeigebereichs der Anzeigeeinrichtung dargestellt wird, dass die dreidimensionalen Koordinaten des mindestens einen virtuellen Elements außerhalb des Anzeigebereichs der Anzeigeeinrichtung liegen, wenn die dreidimensionalen Koordinaten des mindestens einen virtuellen Elements perspektivisch so weit im Vordergrund liegen, dass die zweidimensionale Abbildung des virtuellen Elements unterhalb des Anzeigebereichs der Anzeigeeinrichtung liegt.

Dem Fahrer wird also durch die Signalisierung im unteren Randbereich suggeriert, dass ein Element so weit in den Vordergrund beziehungsweise nach vorne gewandert ist, dass es im Anzeigebereich der Anzeigeeinrichtung nicht mehr dargestellt werden kann.

Vorteilhafterweise ist bei einer weiteren Ausgestaltung des erfindungsgemäßen Verfahrens vorgesehen, dass die Signalisierung durch die Darstellung eines virtuellen Signalisierungselements im Anzeigebereich der Anzeigeeinrichtung realisiert wird. Ein virtuelles Signalisierungselement, das im Blickfeld des Fahrers eingeblendet wird, kann auf einfache Weise signalisieren, dass sich das eigentliche virtuelle Element nicht im Anzeigebereich der Anzeigeeinrichtung befindet. Das virtuelle Signalisierungselement kann viele verschiedene Ausgestaltungen aufweisen. Wichtig ist, dass das virtuelle Signalisierungselement dazu geeignet ist, den Fahrer darauf hinzuweisen, dass ein weiteres relevantes virtuelles Element nicht im Anzeigebereich der Anzeigeeinrichtung dargestellt wird.

Denkbar wäre beispielsweise, dass das virtuelle Signalisierungselement eine grafisch einfache Ausgestaltung aufweist, um die Aufmerksamkeit des Fahrers nicht unnötigerweise zu beeinflussen. Es kann sich zum Beispiel um einen Punkt oder eine Linie handeln. Denkbar ist aber beispielsweise auch die Darstellung von Text in Form beispielsweise des Namens des entsprechenden Objekts, das nicht dargestellt wird.

Bei einer weiteren Ausgestaltung des erfindungsgemäßen Verfahrens ist vorgesehen, dass das virtuelle Signalisierungselement die Breite des nicht dargestellten virtuellen Elements in der für das virtuelle Element perspektivisch korrekten Darstellungsform aufweist. Auf diese Weise kann der Fahrer des Fahrzeugs in etwa abschätzen, wie weit das nicht dargestellte virtuelle Element entfernt ist. Durch die perspektivisch korrekte Breite kann der Fahrer somit erkennen, wieviel schmaler das virtuelle Signalisierungselement im Vergleich zum nächstgelegenen dargestellten virtuellen Element ist, sollte es sich beispielsweise um oben genannte Abstandslinien handeln. Da es sich um eine perspektivisch korrekt dargestellte Breite der tatsächlichen Koordinaten des virtuellen Elements handelt, kann der Fahrer gedanklich die Perspektive erweitern und das virtuelle Signalisierungselement perspektivisch gedanklich korrekt einordnen.

Entsprechend ist bei einer weiteren Ausgestaltung des erfindungsgemäßen Verfahrens vorgesehen, dass das virtuelle Signalisierungselement dem nicht dargestellten virtuellen Element entspricht und dass das virtuelle Signalisierungselement die Größe des virtuellen Elements in der perspektivisch korrekten Darstellungsform aufweist. Durch die perspektivisch korrekte Größe des virtuellen Signalisierungselements in Bezug auf die tatsächlichen dreidimensionalen Koordinaten, die nicht im Anzeigebereich der Anzeigeeinrichtung liegen, kann der Fahrer noch einfacher gedanklich die Perspektive erweitern und das virtuelle Signalisierungselement perspektivisch gedanklich korrekt einordnen. Somit kann der Fahrer gedanklich sein Blickfeld erweitern.

Alternativ oder zusätzlich kann vorgesehen sein, dass das virtuelle Signalisierungselement als Icon dargestellt wird. Ein Icon kann eine beliebige Größe aufweisen, und entweder entsprechend im Randbereich des Anzeigebereichs der Anzeigeeinrichtung dargestellt werden, oder auch, wenn es sich um ein vergleichsweise kleines Icon handelt, im direkteren Blickfeld des Fahrers angeordnet sein.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Anzeigebereichs einer Anzeigeeinrichtung bei Durchführung eines Ausführungsbeispiels eines erfindungsgemäßen Verfahrens,
- Figur 2: eine weitere Darstellung eines Anzeigebereichs einer Anzeigeeinrichtung bei Durchführung eines weiteren Ausführungsbeispiel eines erfindungsgemäßen Verfahrens und
- Figur 3: ein schematische Darstellung eines Fahrzeugs mit einer Vorrichtung zur Durchführung eines erfindungsgemäßen Verfahrens.

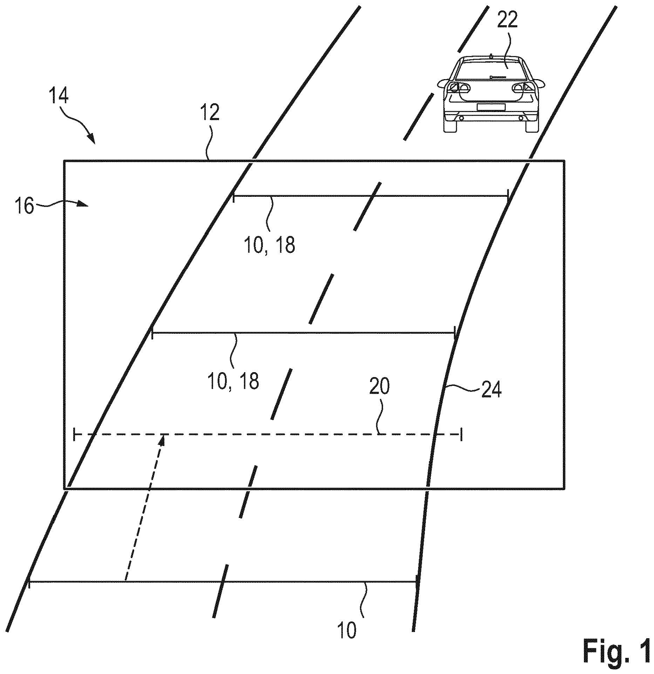

Figur 1 zeigt schematisch die Darstellung von virtuellen Elementen 10 im Anzeigebereich 12 einer Anzeigeeinrichtung 14. In dem Anzeigebereich 12 wird ein dreidimensionaler Raum 16 dargestellt. Die virtuellen Elemente 10 werden durch eine zweidimensionale Abbildung 18 nach Möglichkeit perspektivisch korrekt im Anzeigebereich 12 dargestellt. Dazu werden auf Basis mindestens einer Datenquelle dreidimensionale Koordinaten für die Verortung mindestens eines der virtuellen Elemente 10 bestimmt. Die dreidimensionalen Koordinaten sollen dabei angeben, wo genau die zweidimensionale Abbildung 18 verortet werden muss, damit ein möglichst realistischer Eindruck entsteht, dass die zweidimensionale Abbildung 18 kontaktanalog, also als Teil der Umgebung wahrgenommen wird.

Bei der Bestimmung der dreidimensionalen Koordinaten kann es sein, dass auf Grundlage der Datenquelle ein darzustellendes virtuelles Element 10 außerhalb des Anzeigebereichs 12 der Anzeigeeinrichtung 14 liegen müsste. Dazu ist vorgesehen, dass dem Fahrer des Fahrzeugs signalisiert werden kann, wenn ein für ihn relevantes virtuelles Element 10 nicht im Anzeigebereich 12 dargestellt werden kann. Bei den virtuellen Elementen 10 kann es sich beispielsweise um zugeschaltete Funktionen des Fahrassistenzsystems handeln.

Bei diesem Ausführungsbeispiel wird dem Fahrer über ein virtuelles Signalisierungselement 20 mitgeteilt, dass ein mit der ausgewählten Funktion zusammenhängendes virtuelles Element 10 nicht im Anzeigebereich 12 der Anzeigeeinrichtung 14 angezeigt werden kann. Beim vorliegenden Ausführungsbeispiel werden die dreidimensionalen Koordinaten des virtuellen Elements 10 auf der Grundlage einer Abstandsmessung zum vorausfahrenden Fahrzeug 22 bestimmt. Auf diese Weise können Daten der sogenannten "Adaptive Cruise Control (ACC)" genutzt werden. Bei dieser Funktion können Nutzer zwischen beispielsweise mehreren Anzeigestufen wählen, die jeweils in einem unterschiedlichen Abstand zum vorausfahrenden Fahrzeug 22 resultieren.

Vorliegend wird der zeitliche Abstand beziehungsweise die Zeitlückenverstellung zum vorausfahrenden Fahrzeug 22 bestimmt. Entsprechend der Bezeichnung Zeitlücke ist jede Stufe durch einen spezifischen zeitlichen Abstand zum vorausfahrenden Fahrzeug 22 definiert, wie beispielsweise 1 s. Aus der Ist-Geschwindigkeit sowie der Zeitlücke errechnet sich der zu haltende Abstand, welcher im Anzeigebereich 12 der Anzeigeeinrichtung 14 als kontaktanaloge Linie als virtuelles Element 10 dargestellt werden kann. Denkbar sind dabei auch andere Darstellungen.

In Figur 1 ist ersichtlich, dass die zeitlichen Abstände als Linien für den Fahrer scheinbar auf den Fahrweg 24 projiziert werden. Dem Fahrer werden in diesem Ausführungsbeispiel drei ausgewählte Linien angezeigt, die abhängig vom zeitlichen Abstand auf das vorausfahrende Fahrzeug sind 22. Es ist ersichtlich, dass die dem Fahrer perspektivisch nächstgelegene Linie in Form des untersten virtuellen Elements 10 nicht im Anzeigebereich 12 der Anzeigeeinrichtung 14 angeordnet ist. Bei dem dargestellten Verfahren wird erkannt, dass die dreidimensionalen Koordinaten für dieses virtuelle Element 10 nicht im Anzeigebereich 12 der Anzeigeeinrichtung 14 liegen.

Dies wird dem Fahrer mittels des virtuellen Signalisierungselements 20 mitgeteilt. Das virtuelle Signalisierungselement 20 wird am unteren Rand des Anzeigebereichs 12 der Anzeigeeinrichtung 14 dargestellt und entspricht dem virtuellen Element 10, dessen dreidimensionale Koordinaten außerhalb des Anzeigebereichs 12 liegen. Das bedeutet, dass das virtuelle Signalisierungselement 20 nicht perspektivisch korrekt im Anzeigebereich 12 angezeigt wird, sondern in der Größe und Beschaffenheit, wie es eigentlich für die korrekte Verortung des virtuellen Signalisierungselements 20 vorgesehen wäre. Auf diese Weise kann der Fahrer des Fahrzeugs gedanklich darauf schließen, dass das eigentlich darzustellende virtuelle Element 10, in diesem Fall eine Linie, die in einen bestimmten zeitlichen Abstand zum vorausfahrenden Fahrzeug 22 angezeigt werden soll, deutlich näher liegt, als es durch die Anzeigeeinrichtung 14 dargestellt werden könnte.

Dem Fahrer wird also durch die Darstellung des virtuellen Signalisierungselements 20 im unteren Randbereich des Anzeigebereichs 12 der Anzeigeeinrichtung 14 suggeriert, dass ein Element so weit in den Vordergrund beziehungsweise nach vorne gewandert ist, dass es im Anzeigebereich 12 der Anzeigeeinrichtung 14 nicht mehr dargestellt werden kann.

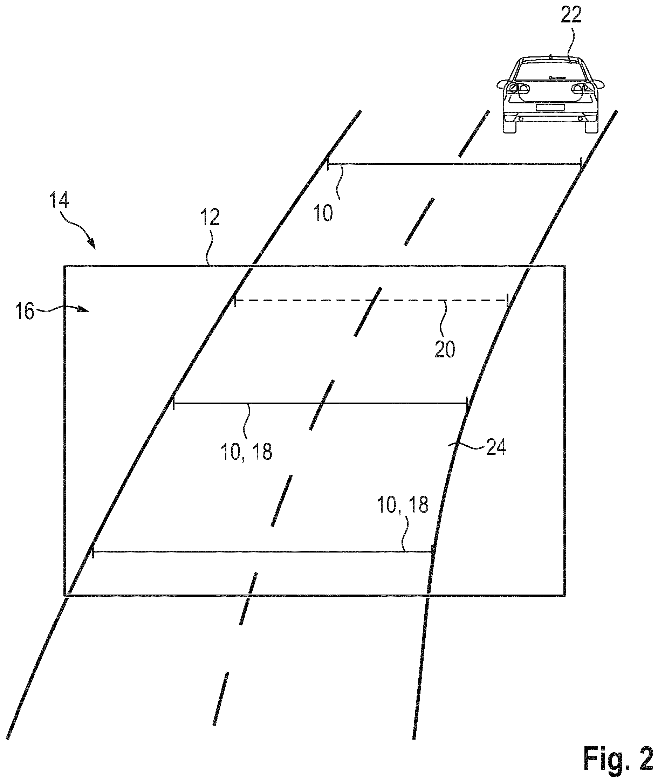

Figur 2 zeigt beispielhaft, analog zu Figur 1, dass die zeitlichen Abstände als Linien für den Fahrer scheinbar auf den Fahrweg 24 projiziert werden. Dem Fahrer werden in diesem Ausführungsbeispiel drei ausgewählte Linien angezeigt, die abhängig vom zeitlichen Abstand auf das vorausfahrende Fahrzeug 22 sind. Es ist ersichtlich, dass die dem Fahrer perspektivisch entfernteste Linie in Form des obersten virtuellen Elements 10 nicht im Anzeigebereich 12 der Anzeigeeinrichtung 14 angeordnet ist. Bei dem dargestellten Verfahren wird erkannt, dass die dreidimensionalen Koordinaten für dieses virtuelle Element 10 nicht im Anzeigebereich 12 der Anzeigeeinrichtung 14 liegen.

Dies wird dem Fahrer mittels des virtuellen Signalisierungselements 20 mitgeteilt. Das virtuelle Signalisierungselement 20 wird am oberen Rand des Anzeigebereichs 12 der Anzeigeeinrichtung 14 dargestellt und entspricht dem virtuellen Element 10, dessen dreidimensionale Koordinaten außerhalb des Anzeigebereichs 12 liegen. Das bedeutet, dass das virtuelle Signalisierungselement 20 nicht perspektivisch korrekt im Anzeigebereich 12 angezeigt wird, sondern in der Größe und Beschaffenheit, wie es eigentlich für die korrekte Verortung des virtuellen Signalisierungselements 20 vorgesehen wäre. Es wird daher kleiner dargestellt, als es bei einer korrekten Verortung an dieser Stelle dargestellt werden würde. Auf diese Weise kann der Fahrer des Fahrzeugs gedanklich darauf schließen, dass das eigentlich darzustellende virtuelle Element 10, in diesem Fall ebenfalls eine Linie, die in einen bestimmten zeitlichen Abstand zum vorausfahrenden Fahrzeug 22 angezeigt werden soll, deutlich weiter liegt, als es durch die Anzeigeeinrichtung 14 dargestellt werden könnte.

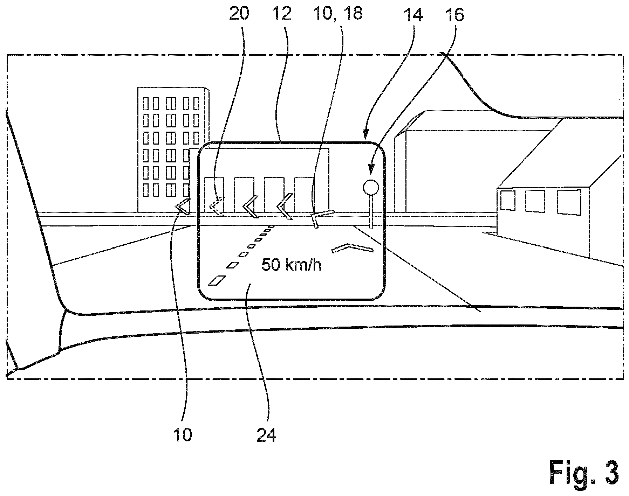

Figur 3 zeigt beispielhaft ein Verfahren gemäß Stand der Technik.

In dem Anzeigebereich 12 der Anzeigeeinrichtung 14 werden die virtuellen Elemente 10 in Form von Navigationshinweisen dargestellt. Die Navigationshinweise, die in diesem Fall eine Abbiegung darstellen, können nicht vollständig perspektivisch korrekt im Anzeigebereich 12 der Anzeigeeinrichtung 14 dargestellt werden. Dies wird dem Fahrer des Fahrzeugs ebenfalls in Form des virtuellen Signalisierungselements 20 angezeigt. Im dargestellten Beispiel handelt es sich um eine zu fahrende Linkskurve, die durch die dargestellten virtuellen Elemente 10 nicht vollständig perspektivisch korrekt dargestellt wird.

Dem Fahrer des Fahrzeugs wird durch die Darstellung des virtuellen Signalisierungselements 20 im linken Randbereich des Anzeigebereichs 12 der Anzeigeeinrichtung 14 angezeigt, dass die Abbiegung noch nicht beendet ist, wenn er lediglich den dargestellten virtuellen Elementen 10 folgen würde. Durch Darstellung des virtuellen Signalisierungselements 20 in der Größe des virtuellen Elements 10, dessen dreidimensionale Koordinaten außerhalb des Anzeigebereichs 12 der Anzeigeeinrichtung 14 liegen, kann der Fahrer abschätzen, inwieweit die Abbiegung über die dargestellten Hinweise hinaus noch andauern wird.

### Bezugszeichenliste

- 10: Virtuelles Element
- 12: Anzeigebereich
- 14: Anzeigeeinrichtung
- 16: Dreidimensionaler Raum
- 18: Zweidimensionale Abbildung
- 20: Virtuelles Signalisierungselement
- 22: Vorausfahrendes Fahrzeug
- 24: Fahrweg

## Patentansprüche

1. Verfahren zur Darstellung eines virtuellen Elements (10) in einem Anzeigebereich (12) mindestens einer Anzeigeeinrichtung eines Fahrzeugs, wobei im Anzeigebereich (12) der Anzeigeeinrichtung (14) ein dreidimensionaler Raum (16) dargestellt wird, wobei auf Basis mindestens einer Datenquelle dreidimensionale Koordinaten für die Verortung mindestens eines virtuellen Elements (10) bestimmt werden, wobei das mindestens eine virtuelle Element (10) als zweidimensionale Abbildung (18) in den dreidimensionalen Raum (16), der im Anzeigebereich (12) der Anzeigeeinrichtung (14) dargestellt wird, transformiert wird, wenn die dreidimensionalen Koordinaten des virtuellen Elements im dargestellten dreidimensionalen Raum (16) innerhalb des Anzeigebereichs der Anzeigeeinrichtung liegen und wobei das mindestens eine virtuelle Element (10) im Anzeigebereich (12) der Anzeigeeinrichtung (14) in Bezug auf den dreidimensionalen Raum (16) perspektivisch korrekt im Blickfeld des Fahrers dargestellt wird, wobei einem Fahrer des Fahrzeugs signalisiert wird, wenn die bestimmten dreidimensionalen Koordinaten des mindestens einen virtuellen Elements (10) außerhalb des Anzeigebereichs (12) der Anzeigeeinrichtung (14) liegen, **dadurch gekennzeichnet, dass** die dreidimensionalen Koordinaten des virtuellen Elements (10) auf der Grundlage einer Abstandsmessung zu einem vorausfahrenden Fahrzeug bestimmt werden.

2. Verfahren nach Anspruch 1, **dadurch gekennzeichnet, dass** die dreidimensionalen Koordinaten des virtuellen Elements (10) auf Grundlage des zeitlichen Abstands zu einem vorausfahrenden Fahrzeug (22) bestimmt werden.

3. Verfahren nach einem der Ansprüche 1 oder 2, **dadurch gekennzeichnet, dass** in einem Randbereich des Anzeigebereichs (12) der Anzeigeeinrichtung (14) dargestellt wird, dass die dreidimensionalen Koordinaten des mindestens einen virtuellen Elements (10) außerhalb des Anzeigebereichs (12) der Anzeigeeinrichtung (14) liegen.

4. Verfahren nach einem der Ansprüche 1 bis 3, **dadurch gekennzeichnet, dass** im oberen Randbereich des Anzeigebereichs (12) der Anzeigeeinrichtung (14) dargestellt wird, dass die dreidimensionalen Koordinaten des mindestens einen virtuellen Elements (10) außerhalb des Anzeigebereichs (12) der Anzeigeeinrichtung (14) liegen, wenn die dreidimensionalen Koordinaten des mindestens einen virtuellen Elements (10) perspektivisch so weit im Hintergrund liegen, dass die zweidimensionale Abbildung (18) des virtuellen Elements (10) oberhalb des Anzeigebereichs (12) der Anzeigeeinrichtung (14) liegt.

5. Verfahren nach einem der Ansprüche 1 bis 4, **dadurch gekennzeichnet, dass** im unteren Randbereich des Anzeigebereichs (12) der Anzeigeeinrichtung (14) dargestellt wird, dass die dreidimensionalen Koordinaten des mindestens einen virtuellen Elements (10) außerhalb des Anzeigebereichs (12) der Anzeigeeinrichtung (14) liegen, wenn die dreidimensionalen Koordinaten des mindestens einen virtuellen Elements (10) perspektivisch so weit im Vordergrund liegen, dass die zweidimensionale Abbildung (18) des virtuellen Elements (10) unterhalb des Anzeigebereichs (12) der Anzeigeeinrichtung (14) liegt.

6. Verfahren nach einem der Ansprüche 1 bis 5, **dadurch gekennzeichnet, dass** die Signalisierung durch die Darstellung eines virtuellen Signalisierungselements (20) im Anzeigebereich (12) der Anzeigeeinrichtung (14) realisiert wird.

7. Verfahren nach Anspruch 6, **dadurch gekennzeichnet, dass** das virtuelle Signalisierungselement (20) die Breite des nicht dargestellten virtuellen Elements (10) in der für das virtuelle Element (10) perspektivisch korrekten Darstellungsform aufweist.

8. Verfahren nach Anspruch 6 oder 7, **dadurch gekennzeichnet, dass** das virtuelle Signalisierungselement (20) dem nicht dargestellten virtuellen Element (10) entspricht und dass das virtuelle Signalisierungselement (20) die Größe des virtuellen Elements (10) in der perspektivisch korrekten Darstellungsform aufweist.

9. Verfahren nach Anspruch 6, **dadurch gekennzeichnet, dass** das virtuelle Signalisierungselement (20) als Icon dargestellt wird.

## Claims

1. Method for representing a virtual element (10) in a display region (12) of at least one display device of a vehicle, wherein a three-dimensional space (16) is represented in the display region (12) of the display device (14), wherein three-dimensional coordinates for the location of at least one virtual element (10) are determined on the basis of at least one data source, wherein the at least one virtual element (10) is transformed as a two-dimensional image (18) into the three-dimensional space (16) that is represented in the display region (12) of the display device (14) when the three-dimensional coordinates of the virtual element in the represented three-dimensional space (16) lie within the display region of the display device and wherein the at least one virtual element (10) is represented in the display region (12) of the display device (14) in the driver's field of vision correctly in perspective in relation to the three-dimensional space (16), wherein a driver of the vehicle is signaled when the determined three-dimensional coordinates of the at least one virtual element (10) lie outside the display region (12) of the display device (14), **characterized in that** the three-dimensional coordinates of the virtual element (10) are determined on the basis of a distance measurement to a vehicle driving in front.

2. Method according to claim 1, **characterized in that** the three-dimensional coordinates of the virtual element (10) are determined on the basis of the temporal distance to a vehicle (22) driving in front.

3. Method according to any one of claims 1 or 2, **characterized in that** in an edge region of the display region (12) of the display device (14) it is represented that the three-dimensional coordinates of the at least one virtual element (10) lie outside the display region (12) of the display device (14).

4. Method according to any one of claims 1 to 3, **characterized in that** in the upper edge region of the display region (12) of the display device (14) it is represented that the three-dimensional coordinates of the at least one virtual element (10) lie outside the display region (12) of the display device (14) if the three-dimensional coordinates of the at least one virtual element (10) lie so far in the background in perspective that the two-dimensional image (18) of the virtual element (10) lies above the display region (12) of the display device (14).

5. Method according to any one of claims 1 to 4, **characterized in that** in the lower edge region of the display region (12) of the display device (14) it is represented that the three-dimensional coordinates of the at least one virtual element (10) lie outside the display region (12) of the display device (14) if the three-dimensional coordinates of the at least one virtual element (10) lie so far in the foreground in perspective that the two-dimensional image (18) of the virtual element (10) lies below the display region (12) of the display device (14).

6. Method according to any one of claims 1 to 5, **characterized in that** the signaling is achieved by representing a virtual signaling element (20) in the display region (12) of the display device (14).

7. Method according to claim 6, **characterized in that** the virtual signaling element (20) has the width of the non-represented virtual element (10) in the perspectively correct representation form for the virtual element (10).

8. Method according to claim 6 or 7, **characterized in that** the virtual signaling element (20) corresponds to the non-represented virtual element (10) **and in that** the virtual signaling element (20) has the size of the virtual element (10) in the perspectively correct representation form.

9. Method according to claim 6, **characterized in that** the virtual signaling element (20) is represented as an icon.

## Revendications

1. Procédé permettant la représentation d'un élément virtuel (10) dans une zone d'affichage (12) d'au moins un dispositif d'affichage d'un véhicule, dans lequel un espace tridimensionnel (16) est représenté dans la zone d'affichage (12) du dispositif d'affichage (14), dans lequel des coordonnées tridimensionnelles sont déterminées sur la base d'au moins une source de données pour la localisation d'au moins un élément virtuel (10), dans lequel l'au moins un élément virtuel (10) est transformé en tant que représentation bidimensionnelle (18) dans l'espace tridimensionnel (16), qui est représenté dans la zone d'affichage (12) du dispositif d'affichage (14), lorsque les coordonnées tridimensionnelles de l'élément virtuel dans l'espace tridimensionnel (16) représenté se trouvent à l'intérieur de la zone d'affichage du dispositif d'affichage et dans lequel l'au moins un élément virtuel (10) est représenté correctement en perspective dans le champ de vision du conducteur dans la zone d'affichage (12) du dispositif d'affichage (14) par rapport à l'espace tridimensionnel (16), dans lequel il est signalé à un conducteur du véhicule lorsque les coordonnées tridimensionnelles déterminées de l'au moins un élément virtuel (10) se trouvent en dehors de la zone d'affichage (12) du dispositif d'affichage (14), **caractérisé en ce que** les coordonnées tridimensionnelles de l'élément virtuel (10) sont déterminées sur la base d'une mesure de distance par rapport à un véhicule qui précède.

2. Procédé selon la revendication 1, **caractérisé en ce que** les coordonnées tridimensionnelles de l'élément virtuel (10) sont déterminées sur la base de la distance temporelle par rapport à un véhicule (22) qui précède.

3. Procédé selon l'une des revendications 1 ou 2, **caractérisé en ce qu'**il est représenté dans une zone marginale de la zone d'affichage (12) du dispositif d'affichage (14) que les coordonnées tridimensionnelles de l'au moins un élément virtuel (10) se trouvent en dehors de la zone d'affichage (12) du dispositif d'affichage (14).

4. Procédé selon l'une des revendications 1 à 3, **caractérisé en ce qu'**il est représenté dans la zone marginale supérieure de la zone d'affichage (12) du dispositif d'affichage (14) que les coordonnées tridimensionnelles de l'au moins un élément virtuel (10) se trouvent à l'extérieur de la zone d'affichage (12) du dispositif d'affichage (14) lorsque les coordonnées tridimensionnelles de l'au moins un élément virtuel (10) se trouvent en perspective dans l'arrière-plan à une distance telle que la représentation bidimensionnelle (18) de l'élément virtuel (10) se trouve au-dessus de la zone d'affichage (12) du dispositif d'affichage (14).

5. Procédé selon l'une des revendications 1 à 4, **caractérisé en ce qu'**il est représenté dans la zone marginale inférieure de la zone d'affichage (12) du dispositif d'affichage (14) que les coordonnées tridimensionnelles de l'au moins un élément virtuel (10) se trouvent en dehors de la zone d'affichage (12) du dispositif d'affichage (14) lorsque les coordonnées tridimensionnelles de l'au moins un élément virtuel (10) se trouvent en perspective au premier plan à une distance telle que la représentation bidimensionnelle (18) de l'élément virtuel (10) se trouve au-dessous de la zone d'affichage (12) du dispositif d'affichage (14).

6. Procédé selon l'une des revendications 1 à 5, **caractérisé en ce que** la signalisation est réalisée par la représentation d'un élément de signalisation virtuel (20) dans la zone d'affichage (12) du dispositif d'affichage (14).

7. Procédé selon la revendication 6, **caractérisé en ce que** l'élément de signalisation virtuel (20) présente la largeur de l'élément virtuel (10) non représenté dans la forme de représentation correcte en perspective pour l'élément virtuel (10).

8. Procédé selon la revendication 6 ou 7, **caractérisé en ce que** l'élément de signalisation virtuel (20) correspond à l'élément virtuel (10) non représenté **et en ce que** l'élément de signalisation virtuel (20) présente la taille de l'élément virtuel (10) dans la forme de représentation correcte en perspective.

9. Procédé selon la revendication 6, **caractérisé en ce que** l'élément de signalisation virtuel (20) est représenté sous forme d'icône.
